(19) Europäisches Patentamt
European Patent Office
Office européen des brevets

(11) **EP 3 039 448 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*G01S 7/521* (2006.01)          *G01S 15/93* (2006.01)
*G10K 9/122* (2006.01)

(21) Anmeldenummer: **14737244.5**

(22) Anmeldetag: **09.07.2014**

(86) Internationale Anmeldenummer:
**PCT/EP2014/064668**

(87) Internationale Veröffentlichungsnummer:
**WO 2015/028184 (05.03.2015 Gazette 2015/09)**

(54) **SENSORANORDNUNG**

SENSOR ARRANGEMENT

ENSEMBLE FORMANT CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2013 DE 102013217362**

(43) Veröffentlichungstag der Anmeldung:
**06.07.2016 Patentblatt 2016/27**

(73) Patentinhaber: **Robert Bosch GmbH**
**70442 Stuttgart (DE)**

(72) Erfinder:
• **BARTYLLA, David**
  **71229 Leonberg (DE)**
• **KOVACS, Attila**
  **70839 Gerlingen (DE)**

(56) Entgegenhaltungen:
**US-A- 5 706 564     US-A1- 2010 208 553**

• **KOSSOFF G: "The Effects of Backing and Matching on the Performance of Piezoelectric Ceramic Transducers", IEEE TRANSACTIONS ON SONICS AND ULTRASONICS, IEEE, US, Bd. 13, Nr. 1, 1. März 1966 (1966-03-01), Seiten 20-30, XP011403767, ISSN: 0018-9537, DOI: 10.1109/T-SU.1966.29370**

**Beschreibung**

Die Erfindung geht aus von einer Anordnung mit einem elektroakustischen Wandler, umfassend einen Vorderkörper, ein piezoelektrisches Element und einen Rückkörper, der an eine Membran gekoppelt ist, gemäß dem Oberbergriff des Anspruchs 1.

Stand der Technik

Um Ultraschallsensoren, insbesondere beim Einsatz in Umfeld-Erfassungssystemen von Kraftfahrzeugen, von außen unsichtbar und geschützt vor Umwelteinflüssen am Fahrzeug anbringen zu können, ist es bekannt Ultraschallwandler vorzusehen, die verdeckt, also von außen unsichtbar, an Innenflächen von Verkleidungs- oder Karosserieelementen angeordnet werden, beispielsweise an einer Innenfläche eines Stoßfängers.

Aus der US 2010/0020646 A1 ist beispielsweise einen Ultraschallsensor bekannt, der in Form eines Dickenschwingers ausgebildet ist und der für einen verdeckten Einbau geeignet ist. Ausgehend von einer Piezokeramik mit Elektroden ist mindestens ein Vorderkörper vorgesehen, der eine Form aufweist, so dass eine gewünschte Abstrahlcharakteristik entsteht. Die Länge des Übertragungsweges entspricht $\lambda/4$ bei der Resonanzfrequenz $f_R$, so dass eine Verstärkung der Vibration ausgehend von der Piezokeramik an der abstrahlenden Oberfläche erreicht wird. Ferner ist gezeigt, dass für manche Anwendungen bevorzugt ein $\lambda/2$-Schwinger verwendet wird, welcher insbesondere hinsichtlich Temperaturstabilität, Verschmutzungsanfälligkeit und Ablagerungen robuster ist. Der $\lambda/2$-Schwinger gemäß der US 2010/0020646 A1 weist einen Vorderkörper und einen Rückkörper auf, wobei die Länge jeweils des Vorder- und Rückkörpers plus der Hälfte der Dicke der Piezokeramikscheibe einem Viertel der Wellenlänge $\lambda$ des Schalls in dem jeweiligen Material entspricht. Die US 2010/0208553 A1 beschreibt einen ähnlichen Aufbau.

Bei derartigen Konzepten, die einen Schallwandler vorsehen, der unsichtbar hinter einem Verkleidungselement, beispielsweise dem Stoßfänger eines Fahrzeugs, montiert werden kann, wird bei Anregung des Schallwandlers ein Bereich des Verkleidungselements zum Schwingen gebracht. Dieser Bereich sendet wiederum Schall aus und wirkt demnach als Membran. Nach dem gleichen Wirkprinzip kann einfallender Schall die Membran zum Schwingen anregen und den Schallwandler veranlassen ein entsprechendes elektrisches Signal zu erzeugen. Eine derartige Sensoranordnung, wie sie zum Beispiel in der US 2010/0208553 A1 beschrieben wird, ist schematisch in Figur 1 dargestellt. Ein derartiger Aufbau hat den Nachteil, dass das freie Ende des Rückkörpers 30 frei schwingt und dadurch ungewollten Schall aussenden kann. Hinzu kommt, dass bei Lagerung des Schallwandlers am Rückkörper, besonders bei horizontalem Einbau können mechanische Stöße zu einer hohen Belastung der Klebungen insbesondere durch Zugspannungen führen. Aus der US 2010/0208553 A1 geht hervor, dass zur Vermeidung dieser Probleme eine Lagerung im Bereich oberhalb der Piezokeramik möglich ist. Es ist nicht vorteilhaft, den Rückkörper zu lagern, da damit die $\lambda/4$-Schwingung des Rückkörpers behindert wäre.

Bei der Angabe der Wellenlänge ist zu beachten, dass sich die Wellenlänge $\lambda$ einer Schwingung allgemein als Quotient aus der Ausbreitungsgeschwindigkeit $c_S$ (Schallgeschwindigkeit) und der Frequenz f der Schwingung ergibt:

$$\lambda = c_S / f.$$

Da die Frequenz f in derartigen Sensoranordnungen vorgegeben ist (durch die Anregung des piezoelektrischen Elements bzw. durch die Frequenz der einfallenden Schallwellen) und die Ausbreitungsgeschwindigkeit $c_S$ im Allgemeinen materialabhängig ist, ergibt sich für den vorderen Bereich des Dickenschwingers (Vorderkörper, Membran) gegebenenfalls eine andere Wellenlänge $\lambda_v$ als für den rückwärtigen Bereich (Rückkörper), wo sich die Wellenlänge $\lambda_r$ einstellt.

Offenbarung der Erfindung

Der Erfindung liegt die Idee zugrunde, den aus dem Stand der Technik bekannten Aufbau eines ein elektroakustischer Wandlers derart abzuändern, dass eine mechanisch stabile Halterung und Lagerung am Rückkörper eines als Dickenschwinger ausgebildeten elektroakustischen Wandlers ermöglicht wird, ohne dass sich eine Beeinträchtigung des Schwingungsverhaltens des Wandlers ergibt. Weiterhin entfallen durch den erfindungsgemäßen Aufbau aufwendige Lagerungskonzepte.

Erfindungsgemäß ist eine Sensoranordnung vorgesehen, die einen elektroakustischen Wandler umfasst, der als Dickenschwinger ausgebildet ist und demnach einen Vorderkörper mit einer Bodenfläche und einer Stirnfläche, mindestens ein scheibenförmiges piezoelektrisches Element mit einer ersten Oberfläche und einer zweiten Oberfläche und einen Rückkörper mit einer ersten Stirnfläche und einer zweiten Stirnfläche aufweist, wobei die Stirnfläche des Vorderkörpers an eine Membran gekoppelt ist, die geeignet ist, Schallwellen abzustrahlen und zu empfangen. Die Bodenfläche des Vorderkörpers ist mit der ersten Oberfläche des piezoelektrischen Elements stoffschlüssig und/oder kraftschlüssig und/oder formschlüssig verbunden und die zweite Stirnfläche des Rückkörpers ist mit der zweiten Oberfläche des piezoelektrischen Elements stoffschlüssig und/oder kraftschlüssig und/oder formschlüssig verbunden. Unter einer stoffschlüssigen Verbindung kann beispielsweise eine Verbindung durch Kleben verstanden werden. Unter einer kraftschlüssigen Verbindung kann beispielsweise eine Verbindung durch Schrauben oder Klemmen verstanden werden. Unter einer formschlüssigen Verbindung kann beispielsweise eine Verbindung durch Einfassen verstanden werden. Diese Möglichkeiten der Verbindung der beschriebenen Oberflächen können beliebig kombiniert und den Erfordernissen der Anwendung der erfindungsgemäßen Sensoranordnung angepasst werden.

Die Stirnfläche des Vorderkörpers, die Bodenfläche des Vorderkörpers, die erste Oberfläche und die zweite Oberfläche des piezoelektrischen Elements sowie die erste Stirnfläche und die zweite Stirnfläche des Rückkörpers sind jeweils parallel zueinander angeordnet und können insbesondere die gleiche Form und Größe aufweisen. Die genannten Oberflächen können beispielsweise kreisförmig, oval, rechteckig oder quadratisch geformt sein. Dies entspricht einem bekannten Aufbau eines als Dickenschwinger ausgebildeten elektroakustischen Wandlers, wie er beispielsweise in der US 2010/0020646 A1 beschrieben ist. Durch die Form und Größe der jeweiligen Flächen und deren Verhältnisse zueinander kann in vorteilhafter Weise die Abstrahlcharakteristik der Sensoranordnung angepasst werden.

Der Begriff des elektroakustische Wandlers im Sinne der Erfindung ist weit zu fassen und umfasst Wandleranordnungen, welche nach elektrostatischen, magnetostriktiven, piezoelektrischen Effekten oder Kombinationen dieser Effekte arbeiten. Im Rahmen der Erfindung kann insbesondere ein piezoelektrisches Element als Wandlerelement vorgesehen sein, wobei bevorzugt Schallwellen im Ultraschallbereich gewandelt werden. Damit kann der erfindungsgemäße elektroakustische Wandler insbesondere in einem Ultraschallsensor zur Umfelderfassung, beispielsweise in Kraftfahrzeugen oder in der Robotik eingesetzt werden.

Die Membran, an die die Stirnfläche des Vorderkörpers des erfindungsgemäßen elektroakustischen Wandlers gekoppelt ist, ist beispielsweise durch eine Außenhaut eines Stoßfängers, Seitenspiegels oder Türbereichs eines Kraftfahrzeugs gebildet, so dass der elektroakustische Wandler versteckt hinter der Außenhaut angeordnet ist. Durch die Kopplung wird die Membran idealerweise in Resonanz angeregt.

Bevorzugt ist vorgesehen, dass die Membran aus einer dünnen Materialschicht gebildet ist, die beispielsweise aus einem Polymermaterial gefertigt ist. Bevorzugt weist die Membran eine Dicke zwischen 0,1 mm und 5 mm, besonders bevorzugt weniger als 3 mm oder weniger als 2 mm auf. Die Kopplung des Vorderkörpers an seiner Stirnseite mit der Membran kann mittelbar oder unmittelbar erfolgen, in jedem Fall aber derart, dass eine akustische Kopplung in ausreichendem Maße ermöglicht ist, d.h., dass geeignete Schwingungen übertragen werden können. Die Kopplung kann beispielsweise durch einen Presssitz, Klemmsitz, wie etwa durch Einschrauben, oder auch durch eine Klebung bewerkstelligt sein. Die Kopplung kann auch durch Umspritzen des Vorderkörpers mit dem Material der Membran erfolgen, was auch als Einbetten bezeichnet werden kann. Eine mittelbare Kopplung kann bedeuten, dass eine weitere Materialschicht zwischen dem Resonanzkörper und der Membran vorgesehen ist, beispielsweise eine Flüssigkeit, wie ein Gel oder ein Öl. Die weitere Materialschicht kann insbesondere dazu vorgesehen sein, um die akustische Kopplung zwischen dem Vorderkörper und der Membran zu optimieren, zum Beispiel um Toleranzen in den Abmessungen der Bauteile oder die Rauigkeit der Oberflächen der Kopplungspartner auszugleichen.

Nach einer bevorzugten Ausführungsform sind der Vorderkörper und der Rückkörper aus unterschiedlichen Materialien gefertigt. Die vom piezoelektrischen Element erzeugten Schallwellen werden somit bevorzugt in Richtung der Stirnseite des Vorderkörpers ausgestrahlt, rückwärtige Strahlung wird unterdrückt. Der Rückkörper ist dazu als sogenannte Inertial-Masse wirksam, d. h. sie ermöglicht durch ihre Masseträgheit die Krafteinleitung in den Vorderkörper und dient so auch zur Dämpfung der Schwingung gegenüber dem Bereich, in welchem keine Abstrahlung von Schallwellen gewünscht ist.

Bevorzugt ist der Vorderkörper aus einem Kunststoff- oder Gummimaterial gefertigt und der Rückkörper aus einem Metall, beispielsweise aus Aluminium, Blech, Stahl oder Messing. Die Auswahl geeigneter Materialien kann durch Einschränkungen oder Vorgaben bezüglich der zu erreichenden Empfangsempfindlichkeiten, Sendesignalstärken oder Arbeitsfrequenzen des erfindungsgemäßen elektroakustischen Wandlers festgelegt sein. Insbesondere können aber auch weitere Umgebungseinflüsse, wie beispielsweise die Umgebungstemperatur oder etwa die mechanische Beanspruchung durch Schütteln, berücksichtigt werden, um geeignete Materialien festzulegen.

Wie bereits erwähnt kann sich die Wellenlänge $\lambda_r$ der Schwingung für den rückwärtigen Bereich der erfindungsgemäßen Sensoranordnung von der Wellenlänge $\lambda_v$ des vorderen Bereichs der Sensoranordnung unterscheiden. Unter dem vorderen Bereich wird der Abschnitt der Sensoranordnung verstanden, der den Vorderkörper, die Membran und die an den Vorderkörper angrenzende vordere Hälfte des piezoelektrischen Elements umfasst. Unter dem rückwärtigen Bereich wird der Abschnitt der Sensoranordnung verstanden, der den Rückkörper und die an den Rückkörper angrenzende hintere Hälfte des piezoelektrischen Elements umfasst. Dabei wird die Wellenlänge $\lambda_r$ im Wesentlichen durch das Material des Rückkörpers bestimmt. Die Wellenlänge $\lambda_v$ im Wesentlichen durch das Material des Vorderkörpers bestimmt. Durch Materialabhängigkeit der Schallgeschwindigkeit kommt es bei festgelegter Frequenz zu unterschiedlichen Wellenlängen.

Erfindungsgemäß ist vorgesehen, dass der Abstand zwischen der ersten Stirnfläche und der zweiten Stirnfläche des Rückkörpers plus der Hälfte der Dicke des piezoelektrischen Elements der Hälfte der Wellenlänge $\lambda_r$ (bezogen auf den rückwärtigen Bereich der Sensoranordnung) einer Resonanzschwingung der Sensoranordnung in Dickenrichtung entspricht.

Unter der Dickenrichtung ist die Richtung der Längserstreckung des elektroakustischen Wandlers zu verstehen, die im Wesentlichen senkrecht zur Ebene der Membran verläuft. Die durch den piezoelektrischen Effekt verursachte Dickenänderung des piezoelektrischen Elements induziert eine Schwingung des Verbunds aus Vorderkörper, Rückkörper und piezoelektrischem Element in diese Dickenrichtung. Durch die erfindungsgemäße Ausbildung des Rückkörpers stellt sich eine Schwingung in Dickenrichtung in Form einer stehenden Welle ein, die im Bereich der ersten Stirnfläche des Rückkörpers einen Schwingungsknoten aufweist. Dadurch schwingt der untere Rand im Bereich der ersten Stirnfläche des Rückkörpers im Idealfall nicht und kann somit beispielsweise mit einem Gehäuse verklebt werden oder anderweitig gelagert werden. Dadurch kommt es zu geringeren mechanischen Spannungen bei horizontalem Einbau und Stoßvorgängen senkrecht zur Schwingungsrichtung.

Bevorzugt ist die Sensoranordnung derart ausgebildet, dass die Summe aus dem Abstand zwischen der Bodenfläche und der Stirnfläche des Vorderkörper, also der Länge des Vorderkörpers, und der Hälfte der Dicke des piezoelektrischen Elements und der Dicke der Membran einem Viertel der Wellenlänge $\lambda_v$ (bezogen auf den vorderen Abschnitt der Sensoranordnung) angeregten Schwingung der Sensoranordnung in Dickenrichtung entspricht.

Bevorzugt weist die Sensoranordnung ein, insbesondere topfförmig ausgebildetes Gehäuse auf, das den elektroakustischen Wandler umgibt und vor Umwelteinflüssen schützt. Die erste Stirnfläche des Rückkörpers ist dabei bevorzugt mit dem Gehäuse stoffschlüssig und/oder kraftschlüssig, beispielsweise durch Kleben und/oder Schrauben verbunden. Das Gehäuse ist bevorzugt so ausgebildet und angebunden, dass es keine Schwingungen in Dickenrichtung ausführt. Aufgrund der erfindungsgemäßen Ausbildung des Rückkörpers ist keine aufwendige Lagerung im Bereich des piezoelektrischen Elements nötig.

Der Rückkörper ist bevorzugt stabförmig mit einer kreisförmigen oder ovalen oder rechteckigen Querschnittsfläche ausgebildet ist. Es ist ebenfalls möglich einen Rückkörper mit einer über seine Länge variierenden Querschnittsfläche vorzusehen. Bevorzugt ist die zweite Stirnfläche des Rückkörpers derart ausgebildet, das ihre Form und Größe der zweiten Oberfläche des piezoelektrischen Elements entspricht.

Der Vorderkörper kann ebenfalls eine über seine Länge variierende Querschnittsfläche aufweisen. Die die Stirnfläche des Vorderkörpers kann kreisförmig oder oval oder rechteckig ausgebildet ist. Durch die Form, Ausrichtung und Größe der Stirnfläche des Vorderkörpers kann insbesondere die Abstrahlcharakteristik der Sensoranordnung angepasst werden. Der Vorderkörper kann auch im Bereich der Anbindung an die Membran gestuft ausgebildet sein. Auf diese Weise kann die Einkopplung der Schwingungen in die Membran verändert werden.

In einer bevorzugten Ausführung umfasst der Vorderkörper eine erste Platte, die die Bodenfläche aufweist und an das piezoelektrische Element gekoppelt ist. Weiterhin umfasst der Vorderkörper eine zweite Platte, die die Stirnfläche aufweist und an die Membran gekoppelt ist. Der Vorderkörper umfasst außerdem einen stabförmigen Abschnitt, der die erste Platte und die zweite Platte miteinander verbindet, wobei die Querschnittsfläche des stabförmigen Abschnitts kleiner ist, als die Bodenfläche und kleiner ist als die Stirnfläche. Durch diese Ausbildung des Vorderkörper in einfacher Weise eine gewünschte Abstrahlcharakteristik erzielt werden.

Bevorzugt ist die Membran als Außenhaut eines Verkleidungselements, beispielsweise eines Karosserieteils, für ein Kraftfahrzeug ausgebildet, wobei die Stirnfläche des Vorderkörpers des elektroakustischen Wandlers an eine Innenfläche des Verkleidungselements derart gekoppelt ist, dass der elektroakustischen Wandler von außen nicht sichtbar ist. Akustische Signale von dem elektroakustischen Wandler können durch die Außenhaut gesendet und empfangen werden. Beim Einsatz einer erfindungsgemäßen Sensoranordnung als oder in einem Ultraschallsensor für ein Fahrzeug hat dies den besonderen Vorteil, dass die Sensoranordnung von außerhalb des Fahrzeugs nicht sichtbar ist. Der elektroakustische Wandler ist dadurch vor Umwelteinflüssen und Beschädigung geschützt und es wird die Anbringung an Fahrzeugstellen ermöglicht, an denen bisher aus ästhetischen Gründen von der Anbringung eines sichtbaren Ultraschallsensors abgesehen wurde.

Kurze Beschreibung der Zeichnungen

Figur 1 zeigt eine Sensoranordnung gemäß dem Stand der Technik.

Figur 2 zeigt eine Sensoranordnung gemäß einem ersten Ausführungsbeispiel der Erfindung.

Figur 3 zeigt eine Sensoranordnung gemäß einem zweiten Ausführungsbeispiel der Erfindung zusammen mit einer Darstellung der Auslenkung über die Bauteillänge.

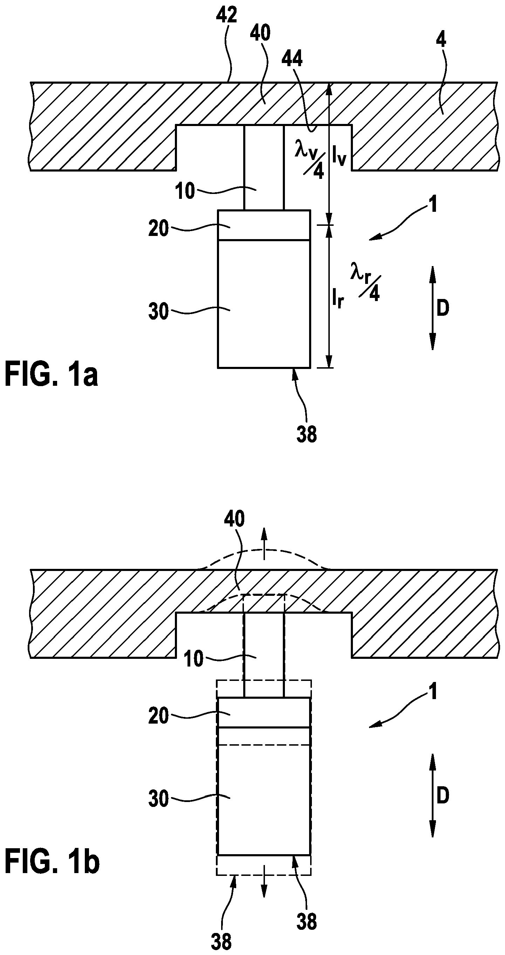

In Figur 1 ist eine Sensoranordnung gemäß dem Stand der Technik schematisch im Schnitt dargestellt. Die Sensoranordnung umfasst einen als Dickenschwinger ausgebildeten elektroakustischer Wandler 1, der an eine Membran 40 akustisch gekoppelt ist. Der elektroakustische Wandler 1 umfasst einen stabförmigen Vorderkörper 10, ein scheibenförmiges piezoelektrisches Element 20 und einen stabförmigen Rückkörper 30. Eine Stirnfläche des Vorderkörpers 30 ist dabei an einer Innenfläche 44 der Membran 40 durch Kleben befestigt. Die Membran 40 ist Teil eines Verkleidungselements 4, beispielsweise eines Stoßfängers eines Kraftfahrzeugs. Der Vorderkörper 10, das piezoelektrische Element 20 und der Rückkörper 30 sind ebenfalls bevorzugt durch Kleben miteinander verbunden.

Mittels Elektroden (nicht dargestellt) können Spannungssignale an das piezoelektrische Element 20 angelegt werden, wodurch der elektroakustische Wandler 1 zu Schwingungen in Dickenrichtung D angeregt wird. In dieser herkömmlichen Anordnung sind die Abstände $I_v$ von der Oberfläche 42 der Membran 40 zur Mitte (in Dickenrichtung betrachtet) des piezoelektrischen Elements 20 und $I_r$ von der Mitte (in Dickenrichtung betrachtet) des piezoelektrischen Elements 20 zur unteren Stirnfläche 38 des Rückkörpers 30 so gewählt, dass bei Anregung des elektroakustischen Wandlers 20 mit einer Resonanzfrequenz, eine stehende Welle mit einer Wellenlänge $\lambda_v$ im Bereich des Vorderkörpers und $\lambda_r$ im Bereich des Rückkörpers ausgebildet wird, und die Abstände $I_v$ und $I_r$ jeweils einem Viertel der den vorderen bzw. den rückwärtigen Bereich der Sensoranordnung 1 bezogene Wellenlänge $\lambda_v$ bzw. $\lambda_r$ entsprechen.

In Figur 1 a) ist die Sensoranordnung in Ruhe dargestellt. In Figur 1 b) ist überlagert in gestrichelten Linien schematisch die Auslenkung der jeweiligen Bauteile (nicht maßstäblich) bei einer angeregten Schwingung dargestellt. Dadurch, dass sich die Stirnfläche 38 des Rückkörpers 30 an einem Schwingungsbauch der stehenden Welle befindet, ist die Auslenkung im Bereich der Stirnfläche 38 des Rückkörpers 30 besonders groß. Dadurch ergeben sich die beschriebenen Nachteile der hohen mechanischen Belastung der Klebungen durch Stöße, sowie dass der Rückkörper 30 selbst nicht im Bereich der Stirnfläche 38 gelagert werden kann, ohne die Schwingung zu behindern.

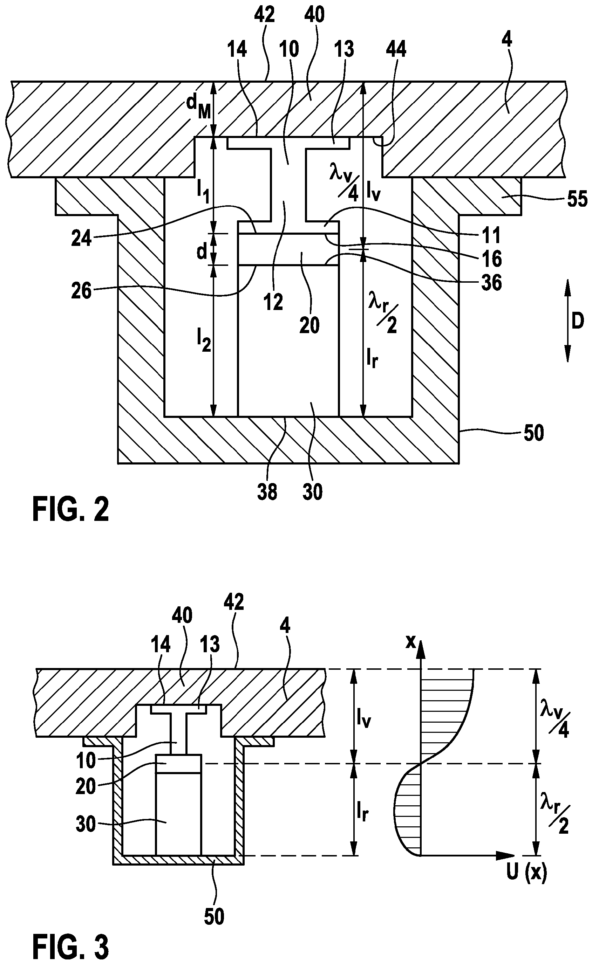

In Figur 2 ist eine erfindungsgemäße Sensoranordnung schematisch im Schnitt dargestellt, die die Nachteile des Stands der Technik überwindet. Die Sensoranordnung umfasst analog zur bekannten Ausführung einen als Dickenschwinger ausgebildeten elektroakustischer Wandler 1, der an eine Membran 40 akustisch gekoppelt ist. Der elektroakustische Wandler 1 umfasst einen stabförmigen Vorderkörper 10 mit einem beispielsweise runden oder rechteckigen Querschnitt, ein in diesem Beispiel scheibenförmiges, piezoelektrisches Element 20 mit einer Dicke d und einen stabförmigen Rückkörper 30. Alternativ kann das piezoelektrisches Element 20 quaderförmig ausgebildet sein. Eine Stirnfläche des Vorderkörpers 30 ist dabei an einer Innenfläche 44 der Membran 40 durch Kleben befestigt. Die Membran 40 ist Teil eines Verkleidungselements 4, beispielsweise eines Stoßfängers eines Kraftfahrzeugs.

Der Vorderkörper 10 weist eine Bodenfläche 16 und einer Stirnfläche 14 auf. Das piezoelektrische Element 20 ist als eine dünne keramische Scheibe ausgebildet und parallel zu einer Abstrahlebene des Wandlers 1 angeordnet. Das piezoelektrische Element 20 weist eine erste Oberfläche 24 und eine, der ersten Oberfläche 24 gegenüberliegende zweite Oberfläche 26 auf. Weiterhin umfasst der elektroakustische Wandler 1 einen Rückkörper 30 mit einer ersten Stirnfläche 38 und einer zweiten Stirnfläche 36. Die Bodenfläche 16 des Vorderkörpers 10 ist mit der ersten Oberfläche 24 des piezoelektrischen Elements 20 stoffschlüssig und/oder kraftschlüssig verbunden, beispielsweise durch Kleben oder Schrauben. Die zweite Stirnfläche 36 des Rückkörpers 30 ist mit der zweiten Oberfläche 26 des piezoelektrischen Elements 20 stoffschlüssig und/oder kraftschlüssig verbunden. Der Vorderkörper weist eine Länge (in Richtung D) $I_1$ auf, entsprechend dem Abstand der Stirnfläche 14 zur Bodenfläche 16. Der Rückkörper weist eine Länge $I_2$ auf entsprechend dem Abstand der ersten Stirnfläche 38 zur zweiten Stirnfläche 36.

Der Vorderkörper 10 und der Rückkörper 30 dienen zur Übertragung und Verstärkung von akustischen Wellen, die von dem piezoelektrischen Element 20 erzeugt oder empfangen werden. Das piezoelektrische Element 20 weist hierzu Elektroden und elektrische Kontakte auf (nicht dargestellt) durch die Spannungssignale an das piezoelektrische Element 20 angelegt oder Spannungssignale bzw. Ladungsverschiebungen, die von dem piezoelektrischen Element 20 erzeugt werden, empfangen werden können. Das piezoelektrische Element kann beispielsweise eine Piezokeramik aufweisen. Der Pfeil D deutet die Hauptschwingungsrichtung (Dickenschwingung) des erfindungsgemäßen elektroakustischen Wandlers 1 an.

Die Stirnfläche 14 des Vorderkörpers 10 ist an eine Innenfläche 44 einer Membran 40 der Dicke $d_M$ gekoppelt, die geeignet ist Schallwellen abzustrahlen oder zu empfangen. Wird der elektroakustische Wandler 1 als Ultraschallsensor in einem Kraftfahrzeug eingesetzt, so kann es sich bei der Membran 40 beispielsweise um die Außenhaut bzw. einen Bereich einer Außenhaut eines Verkleidungselements 4, wie z.B. eines Stoßfängers, handeln. Der elektroakustische Wandler 1 ist dann auf der Innenseite des Verkleidungselements 4 angeordnet und somit von außen nicht sichtbar. Damit ist der elektroakustische Wandler 1 gegen Schmutz und Wettereinflüsse geschützt.

Der elektroakustische Wandler 1 umfasst außerdem ein Gehäuse 50, das hier nur schematisch dargestellt ist. Das Gehäuse 50 dient als Einspannung des Verbunds aus Vorderkörper 10, piezoelektrischem Element 20 und Rückkörper 30. Das Gehäuse 50 ist in diesem Beispiel mit dem Rückkörper 30 an der ersten Stirnfläche 38 verbunden, z.B. durch Klebung. Das Gehäuse 50 ist in diesem Beispiel topfförmig ausgebildet und weist einen Flansch 55 auf. An dem Flansch 55 kann das Gehäuse 50 an der Innenseite des Verkleidungselements 4 befestigt werden, beispielsweise durch Kleben oder Schrauben. Das Gehäuse 50 ist dabei so ausgelegt, dass es nicht schwingt.

Erfindungsgemäß ist vorgesehen, dass der Rückkörper 30 eine Länge I aufweist, die derart gewählt ist, dass die Summe $l_r$ aus der Länge $l_2$ des Rückkörpers 30 und der Hälfte der Dicke d des piezoelektrischen Elements 20 der Hälfte der Wellenlänge $\lambda_r$ einer Resonanzschwingung der Sensoranordnung in Dickenrichtung D entspricht. Der Abstand $l_v$, gemessen von der Oberfläche 42 der Membran 40 bis zur Hälfte der Dicke d des piezoelektrischen Elements 20, entspricht in bekannter Weise einem Viertel der Wellenlänge $\lambda_v$ einer Resonanzschwingung der Sensoranordnung in Dickenrichtung D.

Es gelten demnach folgende Gleichungen:

$$l_r = l_2 + d/2 = \lambda_r/2$$

$$l_v = l_1 + d_M + d/2 = \lambda_v/4$$

Mit anderen Worten sind die Längenverhältnisse unter Berücksichtigung der gegebenenfalls unterschiedlichen Materialen, des Vorderkörpers 10, des piezoelektrischen Elements 20 und des Rückkörpers 30 derart gewählt, dass sich bei piezoelektrischer oder akustischer Anregung des elektroakustischen Wandlers mit einer Resonanzfrequenz, eine stehende Welle ausbildet, die im Bereich des piezoelektrischen Elements 20 und im Bereich der ersten Stirnfläche 38 des Rückkörpers einen Wellenknoten aufweist, also einen Bereich, der idealerweise keine oder nur eine geringe Auslenkung erfährt. Damit ist eine Lagerung des Rückkörpers im Bereich der ersten Stirnfläche 38 am Gehäuse 50 möglich, ohne die Schwingung und damit die Empfangsempfindlichkeit bzw. die Signalstärke der Sensoranordnung zu beeinträchtigen. Die angegebenen Abstände bzw. Längen $l_1$, $l_2$, $l_r$, $l_v$, d, $d_M$ sind jeweils im Ruhezustand der Sensoranordnung zu betrachten.
in Figur 3 ist dieser Sachverhalt nochmals deutlich gemacht indem die maximale Auslenkung U(x) in Längsrichtung x einer erfindungsgemäßen Sensoranordnung dargestellt ist.

In der in Figur 2 dargestellten Ausführung der Erfindung weist der Vorderkörper eine eine über seine Länge variierende Querschnittsfläche auf. Der Vorderkörper 10 weist dabei eine erste Platte 11 auf, die die Bodenfläche 16 aufweist. Die erste Platte 11 bzw. die Bodenfläche 16 entspricht in ihrer Größe und Form im Wesentlichen der ersten Oberfläche 24 des piezoelektrischen Elements. Der Vorderkörper 10 umfasst weiterhin eine zweite Platte 13, die die Stirnfläche 14 aufweist. Die zweite Platte 13 bzw. die Stirnfläche 14 weist in diesem Beispiel eine größere Querschnittsfläche auf als die erste Platte 11. Der Vorderkörper 10 umfasst außerdem einen stabförmigen Abschnitt 12, der die erste Platte 11 und die zweite Platte 13 verbindet, wobei die Querschnittsfläche des stabförmigen Abschnitts 12 kleiner ist, als die Bodenfläche 16 und auch kleiner ist als die Stirnfläche 14. Der derartig ausgestaltete Vorderkörper kann einteilig oder mehrteilig aufgebaut sein. Bei einem mehrteiligen Aufbau können die erste Platte 11, die zweite Platte 13 und der stabförmige Abschnitt 12 als separate Bauteile ausgebildet sein, die beispielsweise durch Kleben oder Schrauben zu einem Vorderkörper 10 verbunden werden. Es ist außerdem denkbar, den Vorderkörper 10 einteilig mit der Membran 40 auszubilden.

Die in Figur 3 dargestellte Ausführung einer erfindungsgemäßen Sensoranordnung unterscheidet sich von der in Figur 2 dargestellten Anordnung durch die Ausbildung des Vorderkörpers 10. Dieser weist in dem Beispiel gemäß Figur 3 lediglich einen stabförmigen Abschnitt 12 und eine Platte 13 mit vergrößerter Querschnittsfläche auf, wobei die Platte 13 die Stirnfläche 14 aufweist und mit der Membran 40 gekoppelt ist. Es ergibt sich somit ein in etwa T-förmiges Profil des Vorderkörpers 10.

**Patentansprüche**

1. Sensoranordnung umfassend einen elektroakustischer Wandler (1) mit einem Vorderkörper (10) mit einer Bodenfläche (16) und einer Stirnfläche (14), mindestens einem piezoelektrisches Element (20) mit einer ersten Oberfläche (24) und einer zweiten Oberfläche (26) und einen Rückkörper (30) mit einer ersten Stirnfläche (38) und einer zweiten Stirnfläche (36), wobei die Stirnfläche (14) des Vorderkörpers (10) an eine Membran (40) gekoppelt ist, die geeignet ist Schallwellen abzustrahlen und/oder zu empfangen,
   und wobei die Bodenfläche (16) des Vorderkörpers (10) mit der ersten Oberfläche (24) des piezoelektrischen Elements (20) stoffschlüssig und/oder kraftschlüssig und/oder formschlüssig, verbunden ist und die zweite Stirnfläche (36) des Rückkörpers (30) mit der zweiten Oberfläche (26) des piezoelektrischen Elements (20) stoffschlüssig und/oder kraftschlüssig und/oder formschlüssig verbunden ist,
   **dadurch gekennzeichnet, dass**
   die Summe ($l_r$) aus dem Abstand ($l_2$) zwischen der ersten Stirnfläche (38) und der zweiten Stirnfläche (36) des Rückkörpers (30) und der Hälfte der Dicke (d) des piezoelektrischen Elements (20) der Hälfte der Wellenlänge ($\lambda_r$) einer Resonanzschwingung der Sensoranordnung in Dickenrichtung (D) entspricht, wobei der Vorderkörper (10) eine über seine Länge variierende Querschnittsfläche aufweist und der Vorderkörper (10) eine erste Platte (11) umfasst, die die Bodenfläche (16) aufweist und eine zweite Platte (13) umfasst, die die Stirnfläche (14) aufweist, sowie einen stabförmigen Abschnitt (12) aufweist, der die erste Platte (11) und die zweite Platte (13) verbindet, wobei die Querschnittsfläche des stabförmigen Abschnitts (12) kleiner ist, als die Bodenfläche (16) und kleiner ist als die Stirnfläche (14).

2. Sensoranordnung nach Anspruch 1, **dadurch ge-**

**kennzeichnet, dass** die Summe ($I_v$) aus dem Abstand zwischen der Bodenfläche (16) und der Stirnfläche (14) des Vorderkörpers (10) und der Hälfte der Dicke (d) des piezoelektrischen Elements (20) und der Dicke ($d_M$) der Membran (40) einem Viertel der Wellenlänge ($\lambda_v$) der angeregten Schwingung der Sensoranordnung in Dickenrichtung (D) entspricht.

3. Sensoranordnung nach einem der Ansprüche 1 oder 2, **dadurch gekennzeichnet, dass** die Sensoranordnung ein, insbesondere topfförmig ausgebildetes, Gehäuse (50) umfasst, das den elektroakustischen Wandler (1) umgibt, wobei die erste Stirnfläche (38) des Rückkörpers (30) mit dem Gehäuse (50) stoffschlüssig und/oder kraftschlüssig verbunden ist.

4. Sensoranordnung nach einem der Ansprüche 1 bis 3, **dadurch gekennzeichnet, dass** der Rückkörper (30) stabförmig mit einer kreisförmigen oder ovalen oder rechteckigen Querschnittsfläche ausgebildet ist.

5. Sensoranordnung nach einem der Ansprüche 1 bis 4, **dadurch gekennzeichnet, dass** der die Stirnfläche (14) des Vorderkörpers (10) kreisförmig oder oval oder rechteckig ausgebildet ist.

6. Sensoranordnung nach einem der Ansprüche 1 bis 5, **dadurch gekennzeichnet, dass** die Membran (40) als Außenhaut eines Verkleidungselements (4) für ein Kraftfahrzeug ausgebildet ist, wobei die Stirnfläche (14) des Vorderkörpers (10) des elektroakustischen Wandlers (1) an eine Innenfläche (44) des Verkleidungselements (4) gekoppelt ist, so dass der elektroakustischen Wandler (1) von außen nicht sichtbar ist, wobei akustische Signale von dem elektroakustischen Wandler (1) durch die Außenhaut gesendet und empfangen werden können.

7. Ultraschallsensor zur Umfelderfassung eines Fahrzeugs, umfassend eine Sensoranordnung nach einem der Ansprüche 1 bis 6.

**Claims**

1. Sensor arrangement comprising an electroacoustic transducer (1) having a front body (10) with a bottom face (16) and an end face (14), at least one piezoelectric element (20) with a first surface (24) and a second surface (26), and a rear body (30) with a first end face (38) and a second end face (36), wherein the end face (14) of the front body (10) is coupled to a diaphragm (40) which is suitable for emitting and/or receiving sound waves,
and wherein the bottom face (16) of the front body (10) is connected to the first surface (24) of the piezoelectric element (20) in a cohesive and/or force-fitting and/or form-fitting manner, and the second end face (36) of the rear body (30) is connected to the second surface (26) of the piezoelectric element (20) in a cohesive and/or force-fitting and/or form-fitting manner,
**characterized in that**
the sum ($I_r$) of the distance ($I_2$) between the first end face (38) and the second end face (36) of the rear body (30) and half of the thickness (d) of the piezoelectric element (20) corresponds to half the wavelength ($\lambda_r$) of a resonant oscillation of the sensor arrangement in the thickness direction (D), wherein the front body (10) has a cross-sectional area varying over its length, and the front body (10) comprises a first plate (11) having the bottom face (16) and a second plate (13) having the end face (14) as well as a rod-shaped section (12) which connects the first plate (11) and the second plate (13), wherein the cross-sectional area of the rod-shaped section (12) is smaller than the bottom face (16) and is smaller than the end face (14).

2. Sensor arrangement according to Claim 1, **characterized in that** the sum ($I_v$) of the distance between the bottom face (16) and the end face (14) of the front body (10) and half the thickness (d) of the piezoelectric element (20) and the thickness ($d_M$) of the diaphragm (40) corresponds to a quarter of the wavelength ($\lambda_v$) of the excited oscillation of the sensor arrangement in the thickness direction (D) .

3. Sensor arrangement according to either of Claims 1 and 2, **characterized in that** the sensor arrangement comprises a housing (50), in particular a pot-shaped housing, which surrounds the electroacoustic transducer (1), wherein the first end face (38) of the rear body (30) is connected to the housing (50) in a cohesive and/or force-fitting manner.

4. Sensor arrangement according to one of Claims 1 to 3, **characterized in that** the rear body (30) is in the form of a rod with a circular or oval or rectangular cross-sectional area.

5. Sensor arrangement according to one of Claims 1 to 4, **characterized in that** the end face (14) of the front body (10) is circular or oval or rectangular.

6. Sensor arrangement according to one of Claims 1 to 5, **characterized in that** the diaphragm (40) is in the form of an outer skin of a trim element (4) for a motor vehicle, wherein the end face (14) of the front body (10) of the electroacoustic transducer (1) is coupled to an inner face (44) of the trim element (4), with the result that the electroacoustic transducer (1) is not visible from the outside, wherein acoustic signals can be transmitted and received by the electroacoustic transducer (1) through the outer skin.

7. Ultrasonic sensor for capturing the environment of a vehicle, comprising a sensor arrangement according to one of Claims 1 to 6.

**Revendications**

1. Ensemble formant capteur qui comprend un transducteur électroacoustique (1) comportant un corps avant (10) possédant une face de fond (16) et une face frontale (14), au moins un élément piézoélectrique (20) possédant une première surface (24) et une seconde surface (26) et un corps arrière (30) possédant une première face frontale (38) et une seconde face frontale (36), dans lequel la face frontale (14) du corps avant (10) est accouplée à une membrane (40) qui est apte à émettre et/ou à recevoir des ondes sonores, et dans lequel la face de fond (16) du corps avant (10) est reliée à la première surface (24) de l'élément piézoélectrique (20) par complémentarité de matériau et/ou par complémentarité de force et/ou par complémentarité de forme, et la seconde face frontale (36) du corps arrière (30) est reliée à la seconde surface (26) de l'élément piézoélectrique (20) par complémentarité de matériau et/ou par complémentarité de force et/ou par complémentarité de forme, **caractérisé en ce que** la somme ($l_r$) de la distance ($l_2$) entre la première face frontale (38) et la seconde face frontale (36) du corps arrière (30) et de la moitié de l'épaisseur (d) de l'élément piézoélectrique (20) correspond à la moitié de la longueur d'onde ($\lambda_r$) d'une oscillation de résonance de l'ensemble formant capteur dans la direction de l'épaisseur (D), dans lequel le corps avant (10) possède une surface de section transversale variant sur sa longueur et le corps avant (10) comprend une première plaque (11) qui comporte la face de fond (16) et comprend une seconde plaque (13) qui comporte la face frontale (14), et comporte également une partie en forme de tige (12) qui relie la première plaque (11) et la seconde plaque (13), dans lequel la surface de section transversale de la partie en forme de tige (12) est plus petite que la face de fond (16) et plus petite que la face frontale (14).

2. Ensemble formant capteur selon la revendication 1, **caractérisé en ce que** la somme ($l_v$) de la distance entre la face de fond (16) et la face frontale (14) du corps avant (10) et de la moitié de l'épaisseur (d) de l'élément piézoélectrique (20) et de l'épaisseur ($d_M$) de la membrane (40) correspond à un quart de la longueur d'onde ($\lambda_v$) de l'oscillation excitée de l'ensemble formant capteur dans la direction de l'épaisseur (D).

3. Ensemble formant capteur selon l'une des revendications 1 ou 2, **caractérisé en ce que** l'ensemble formant capteur comprend un boîtier (50), en particulier un boîtier réalisé sous forme de pot, qui entoure le transducteur électroacoustique (1), dans lequel la première face frontale (38) du corps arrière (30) est reliée au boîtier (50) par complémentarité de matériau et/ou par complémentarité de force.

4. Ensemble formant capteur selon l'une des revendications 1 à 3, **caractérisé en ce que** le corps arrière (30) est réalisé sous la forme d'une tige possédant une section transversale circulaire, ovale ou rectangulaire.

5. Ensemble formant capteur selon l'une des revendications 1 à 4, **caractérisé en ce que** la face frontale (14) du corps avant (10) est réalisée de manière à posséder une forme circulaire, ovale ou rectangulaire.

6. Ensemble formant capteur selon l'une des revendications 1 à 5, **caractérisé en ce que** la membrane (40) est réalisée sous la forme d'une peau extérieure d'un élément de garniture (4) destiné à un véhicule automobile, dans lequel la face frontale (14) du corps avant (10) du transducteur électroacoustique (1) est accouplée à une face intérieure (44) de l'élément de garniture (4), de manière à ce que le transducteur électroacoustique (1) ne soit pas visible de l'extérieur, dans lequel des signaux acoustiques provenant du transducteur électroacoustique (1) peuvent être émis et reçus à travers la peau extérieure.

7. Capteur à ultrasons destiné à détecter l'environnement d'un véhicule, comprenant un ensemble formant capteur selon l'une des revendications 1 à 6.

FIG. 1a

FIG. 1b

**FIG. 2**

**FIG. 3**

**IN DER BESCHREIBUNG AUFGEFÜHRTE DOKUMENTE**

**In der Beschreibung aufgeführte Patentdokumente**

- US 20100020646 A1
- US 20100208553 A1